# EUROPEAN PATENT APPLICATION

(11) **EP 4 641 523 A1**
(43) Date of publication of application: **29.10.2025**
(21) Application number: 24020127.7
(22) Date of filing: 24.04.2024
(51) Int. Cl.: G06V 20/52, G06V 10/62, G06V 10/82

(54) **METHOD OF TRACKING OBJECTS USING COMPUTER VISION WITH REDUCED COMPUTATIONAL WORKLOAD AND HUMAN-IN-THE-LOOP SCHEME ENSURING HIGH RELIABILITY AND FAST SETUP**

(71) Applicant: Inovec Technology s.r.o., 186 00 Praha 8 (CZ)
(72) Inventor: Fackovec, Boris, 120 00 Praha 2 (CZ); Kofira, Eduard, 065 11 Nová L'ubovna (SK); Kohout, Pavel, 674 01 Trebíc (CZ)
(74) Representative: Originvent

(57) **Abstract**

The disclosed invention relates to a method of tracking objects using computer vision with reduced computational workload and human-in-the-loop scheme ensuring high reliability and fast setup. The invention is particularly suitable for tracking larger objects of known shape or appearance and employs use of a finite number of well-positioned stationary cameras, wherein the tracking is performed, for example, in large industrial halls, warehouses without fixed shelf systems, container docks, train docks, car parks etc. The method provides a reliable data source for obtaining digital twin of objects to be tracked, representing real-time information on each stock keeping unit (SKU) in a warehouse (WH), which brings significant benefits to WH managers and thus saving human labor spent on looking for material, improving management flow, reducing the overall equipment effectiveness (OEE) of vehicles, improving throughput, quality etc. The main barrier to installing digital twins is the problem of funneling the real-time data into the WH object model.

## Description

### TECHNICAL FIELD

The disclosed invention relates to a method of tracking objects using computer vision with reduced computational workload and human-in-the-loop scheme ensuring high reliability and fast setup. The invention is particularly suitable for tracking larger objects of known shape or appearance and employs use of a finite number of well-positioned stationary cameras, wherein the tracking is performed, for example, in large industrial halls, warehouses without fixed shelf systems, container docks, train docks, car parks etc. It is particularly suitable for tracking coils, metal pieces, shipping containers or boxes and larger construction elements. Thus, it is not suitable for uneven and/or small objects with surface area smaller than 0.01 m². However, the tracking means can be adopted to securely recognize even such objects, but higher computational power and better resolution cameras shall be used in such a scenario.

The method eliminates the need of using physical object labels. The reduced computational workload is primarily achieved by selecting suitable means for accurate optical recognition of the tracked objects and actions performed by human operators and devices responsible for movement with the tracked objects, and by focusing on key attributes of the tracked object which provides sufficient and reliable information on the movement and position of the object in the area of interest within the relevant time period. Moreover, the method ensures possibility to subsequently and repeatedly annotate and/or amend and/or correct the data by employing human-in-the-loop scheme, which gives room for elimination of any potential errors, improves accuracy of the already processed data and serves as a basis for increasing accuracy of further monitoring.

The method provides a reliable data source for obtaining digital twin of objects to be tracked, representing real-time information on each stock keeping unit (SKU) in a warehouse (WH), which brings significant benefits to WH managers and thus saving human labor spent on looking for material, improving management flow, reducing the overall equipment effectiveness (OEE) of vehicles, improving throughput, quality etc. The main barrier to installing digital twins is the problem of funneling the real-time data into the WH object model.

### BACKGROUND ART

Existing technical solutions dealing with tracking and/or monitoring of objects in industrial complexes, such as production and storage halls, usually rely on the use of human workers who constantly monitor and control the inventory. This method of tracking objects greatly reduces the possibilities of production planning, as the information on the objects is outdated and is only updated when the inventory of goods is carried out and completed at a given point in time. The disadvantage is the distinct possibility of human error, which cannot be reliably verified retrospectively. A number of other disadvantages can be found from this method of tracking objects, and therefore various ways have been sought to automate the tracking of goods to some extent.

For example, it is known to use tracking labels which are added on the goods to be tracked and by means of an optical tracking code, such as QR code, it is possible to identify the object. The obvious disadvantage is the necessity to attach such a label to each object, resulting in that each label can be very easily damaged during transport or handling and/or the label may not be visible from the distance or specific angle, thus greatly reducing the effectiveness of such method. Furthermore, the labels may not be visible from the distance or may be placed outside the pile.

A similar method of tracking an object employs use of RFID tags, which have the advantage that the object does not need to be tracked optically, but it is sufficient that it is within range of the reading device. Again, however, there is the possibility of damage to the RFID tag and, in addition, the movement of the object cannot be reliably tracked along its entire path, but only when it has appeared in the proximity of the reading device. It is also known that RFID technology does not work reliably in metallurgy environments and tags get easily damaged or cannot be placed at high temperature material.

One of the technically relevant and conceptually simplest fully computer vision-based approaches would be 3D modeling the space using photogrammetry. However, that would require camera images from a number of views, filling an entire warehouse with cameras and costing a high amount of computation.

Another approach uses SLAM from cameras on vehicles, which bears the problem in case of changing vehicles. Also, the installation and maintenance costs can be unacceptable.

It is one objective of this invention to mitigate to a large extent the need for high computing power while achieving best possible results and accuracy of the digital time trace capturing the movement of tracked objects in a specified space.

### SUMMARY OF THE INVENTION

The above disadvantages are removed by the implementation of sequence of method steps described further and by use of technical means adapted to carry out this method in a required manner. In other words, the present method is working only with the amount of information that is not complete to reproduce a full 3D model photogrammetrically, but is sufficient for a person to identify individual objects, thereby reducing the abundant data to be processed. Human intervention is needed due to the variability in the production that cannot be fully planned ab initio.

Present method allows for very rapid deployment due to the presence of physical elements adapted for this purpose and the involvement of a human annotator in error removal and fast system training increasing its accuracy on the fly.

It is required that the physical setup of the elements used to carry out this method meets certain criteria and prerequisites, whilst the present invention is not limited to physical elements available at present, but may suitably take advantage of the availability of technical alternatives thereof in the future.

In one embodiment of the invention, the components include multiple cameras and computer processors, which perform one or more of the operations described below. The method also requires the involvement of a human operator.

Part of the physical setup is described as the so-called edge-cloud hybrid, which involves use of at least one computer processor connected to the camera in its proximity, preferably not extending the distance of 1 km, more preferably being placed within the distance of 1m from the camera, wherein at least one processor is close to a remote human operating the data correction tools. The term "remote" is defined as maximum distance being equal to speed of light multiplied by the required latency for the controlled output data.

Further prerequisite to be met is latency for human-in-the-loop AI, wherein the information regarding object's exact position is required with certainty only after a time period sufficient for the human operator to check the data quality (at least a few seconds), and a mistake in the data is admissible for the 'real-time' data.

It is further important that the physical setup of the tracking system is adopted to cover all positions of the tracked object so that the object is visible during its movement by at least one camera to ensure conserving its identification data (ID) in the system. It is not necessary to secure the visibility of the object by the same camera, but it is sufficient to obtain information on the movement from different viewpoints provided by different cameras.

As to the number of cameras needed to carry out the method, it depends on the required resolution of the digital representation, the total surface area of those objects that can be moved, and the quality of used cameras. In order to reduce the costs and computational power, it is particularly suitable to use this method for larger objects as mentioned above.

For example, a warehouse of 10k m² observed at accuracy 0.1 x 0.1 m can be represented with a mesh of -3M points, and thus require ~300 cameras with 1 Mpx resolution 1280 x 720 to be sufficiently covered. The camera can be positioned, for example, in the warehouse roof, on the walkways above the cranes, on cranes, on the warehouse walls, on top of office containers etc.

It is advantageous that the camera frame rate, its resolution and contrast is high enough for recognition and identification of transportation means used for physical interaction with the tracked object including its movement within the observed area, pickup and pickdown of the tracked object, etc. The recognition and identification of transportation means and its movement must be identified reliably by a human after a suitable transformation of the image obtained by the camera (e.g. contrast filter on pixels, noise reduction using a sequence of images, advanced methods, such as DeblurGAN etc.). In case that these conditions are not met, the probability of error in tracking rises substantially.

The requirements on the quality of the image shall take into account the size of the object being tracked, the speed of the transportation means (such as vehicles, cranes, etc.), the resolution of the camera and the time required to manipulate with the object. Based on these facts, it is possible to calculate the minimum required frame rate of image recording.

In order to track any object in a given area, it is essential to deploy all cameras according to the requirements set above.

One important aspect of the present invention related to reducing the overall computational workload lies in that the data from cameras are processed at the local processor using the virtual sensor approach, which will be described in more detail further. Several virtual sensors are employed and compared in order to strengthen the signal and detect outlier data, which relates to a potential error. The reliable data reached by consensus of sensors are compared against the data from other devices, in particular from other cameras, or can also be compared to the data from relevant HW sensors, such as odometers, lidars etc. The detection of an object is provided by thresholding the SW signal and cross-checking against the physical possibility of the detected outcome (e.g. the crane cannot disappear from a 10 m area within <1 s). The disagreements between sensors or sensor information and physical possibilities are sent to the remote human operator for correction.

Such approach demonstrates substantial advantages, since it reduces the need for data flows, as most data are processed at local processors, further it improves latency due to fast local processing, improves availability of the system in terms of losing the connection between the local and remote processor (if the connection is lost, the system still continues working), while allowing high reliability of the detection through ex-post checks and using external processors if needed.

For the purpose of this invention, the virtual sensor relies on a computer program that takes a simplified representation of 3D space on input and returns the occurrence probability of a specific object in a certain position and certain time on the output, same as an equivalent HW sensor would produce the corresponding data in physical space.

The sensor is repeatedly applied to processed images, and provides a time series of probabilities of a presence or motion of an object at a specific position, which can be used for consolidation i.e. strengthening signal across several virtual sensors and detecting the object presence or motion at high accuracy.

The present solution uses multiple virtual sensors per camera stream to measure probability and detect:
- object (dis)appearance - comparing images of the same part of the observed area, ideally from stationary cameras, helps identify time and position of appearance / disappearance / pickup / pickdown of an object;
- objects motion - objects can move on their own (e.g. vehicles, floating objects, rail cars, objects on conveyor belts), and their motion with respect to the stationary environment can be detected with herein described virtual sensor approach, ideally using stationary cameras;
- transportation means (such as vehicles) presence - objects can be transported by various transportation means, mostly by vehicles, e.g. cranes, forklifts, trucks, etc and their movement can be accurately measured by the virtual sensors according to this invention, ideally using stationary cameras or cameras attached to the vehicles.

Further to the aforementioned advantage of reduced computational workload, the advantage of using virtual sensors lies in the possibility to easily interpret their position in physical space. Also, they can be easily verified (using the underlying image), automatically set up, and can be set up ex post on past data.

Another object of this invention is to increase accuracy of the data received by the above virtual sensors, so that it is possible to annotate and/or amend and/or correct the existing data representing digital twin of objects to be tracked, or in other words the real-time information on each stock keeping unit (SKU) in a warehouse (WH). The human-in-the-loop scheme gives room for elimination of any potential errors, improves accuracy of the already processed data and serves as a basis for increasing accuracy by leveraging knowledge gained from a larger dataset. Moreover, a pre-trained model often converges faster during fine-tuning compared to training from scratch.

The virtual sensors are initially advantageously set-up using a pre-trained convolutional neural network (CNN), which is set on a specific position in the simplified 3D model. The pre-training process involves training a CNN on a large dataset for a related task before fine-tuning it on the specific task of interest. Use of CNN has the advantage in that features learned during pre-training on a large dataset are often transferable to other tasks. Also, it is data efficient, since pre-training helps in overcoming data limitations for the target task by leveraging knowledge gained from a larger dataset. Moreover, a pre-trained model often converges faster during fine-tuning compared to training from scratch.

Values of sensors over a period of time are shown to a human for determining whether the specific object is or is not in the area.

The annotated data are then used to retrain the CNN. This approach is done at the initial setup, but also continually to improve the accuracy of the system by:
- correcting any potential mistakes (disagreement between sensors) and
- continually improving the quality of the CNN and adjusting to any changes in the production.

Such approach is particularly advantageous by eliminating the need for SW experts or data scientists, whereby the majority of work is done by the pre-trained virtual sensor. Thus, only employees with minimum training are needed, the reliability of the system is very high, early from the beginning, and the virtual sensors dynamically adjust to changes in the production.

Data processing workflow involves following steps (combination of steps or a permutation of this order):
- preferably, arranging of images using 3D knowledge of the area to obtain video footage (this step serves to give human annotators better overview of the data to be controlled, in particular if not arranged by machine upon defining the 3D position of each virtual sensor);
- applying CNNs in order to turn parts of the individual image into scores representing likelihood of occurrence of an object in a corresponding 3D area, thus processing the video footage into a time series data using CNN or other feature assessment techniques, wherein the object of interest may also include material, material changes, and vehicles;
- preferably, combining time series data from multiple sources to achieve consensus or escalate the error for human correction (this step significantly improves the accuracy, is an important element of the human in the loop);
- tracking of vehicles, wherein, for any detected object, its position in time t+dt is updated from its position in time t assuming a certain maximum displacement for items associated with vehicles and no motion for items not associated with vehicles;
- association of tracked object and transportation means;
- connecting of pick-ups and pick-downs by transportation means (association of object and transportation mean) into full transport trajectories;
- updating of the database of instantaneous objects and transportation means positions by simulating the transport trajectories.

The above-described steps are advantageous in that, at any critical step of the workflow, they provide easy human control or even fully manual processing of the step by remote human operators (annotators) through web data correction tools.

It is advantageous to use 3D modelling for spatial consolidation of virtual sensor data, wherein physical interpretation of any sensor can be derived from 3D position of the cameras and the spatial arrangement of objects inside the monitored area. The positions, mutual orientations and intrinsic properties of cameras must be set to set up the methods of combining sensor data into object positions.

Further, it is advantageous to implement cross-checking across unreliable sources by combining data sources to execute one or more of the steps. This provides an interface to a human correcting the database. The result of the above step is higher strength of virtual sensor signal and highlighting potential errors, which makes it easier to find and remove the error in the data on object tracking.

By the use of present method, the identity of each item in the area is inferred by association of objects and transporting means (vehicles) with events and tracking the position of objects and transport vehicles in time. This provides the advantage to track objects which are visually indistinguishable, and thus eliminating the need to use labels or tags.

Furthermore, by implementing the above steps, the projection of sensors for easy data interpretation and improved accuracy is dimensionally reduced through 1D tracking methods, which is more straightforward to interpret by human annotator and eliminates risk of error.

It is also advantageous to use integrated applications for automatic detections.

As suggested previously, the implementation of the human-in-the-loop scheme by using manual corrections greatly improves the accuracy of the object tracking path and serves as a basis for further improvement of the system by automatic teaching from previous errors. Once the human annotator makes the correction, the system will learn how to deal with similar scenario in the future.

Further improvement of the method is achieved by combining tracking algorithms for improved automatic accuracy, which can be selected from:
- expectation-maximization (EM) algorithm, which is defined as an iterative method to find (local) maximum likelihood or maximum a posteriori (MAP) estimates of parameters in statistical models, where the model depends on unobserved latent variables; in certain cases an adjusted version of the algorithm is used where physical boundaries and conditions impose rules on the latent distribution membership when evaluating tracking step at t+dt. The first estimate of an estimator is usually taken into account.
- Gaussian curve fitting, which approximates a curve which is specified point for point by an x-channel and a y-channel, with a Gaussian curve according to the known formula. The process of Gaussian curve fitting involves finding the values of µ and σ that maximize the likelihood of the observed data given the Gaussian distribution. This is often done using methods such as maximum likelihood estimation (MLE) or least squares fitting;
- NEB (Nudged Elastic Band) technique, which works by dividing the transition pathway into a series of images, representing different configurations along the path. These images are then connected by springs, forming an elastic band. The band is "nudged" iteratively until it converges to the minimum energy pathway, providing insights into the energetics and mechanisms of the studied process.

### BRIEF DESCRIPTION OF THE DRAWINGS

The invention will be elucidated based on an exemplary embodiment shown in the attached drawings, in which:
Fig. 1 shows an example of multi-camera view obtained by arranging images into a composite image of an entire observed plane, e.g. the entire ground of the warehouse, or the plane of the cranes;
Fig. 2 shows an overlap of the cameras for the same row where objects are placed, supported by schematic representation of camera stream on the side of image;
Fig. 3 shows placement of CNN detector on the image received from camera, wherein the CNN detectors represented by a frame are placed in each region of interest where position of the object of interest, such as for example a product or a material, is expected, so that each CNN detector detects any pick-ups and picks-downs of the object;
Fig. 4 shows the images from two different cameras with the change in object placement identified by CNN detector;
Fig. 5 shows representation of motion of the objects and corresponding trajectories using collective coordinate;
Fig. 6 shows representation of motion and events as in Fig. 5 with additional marking of pickups and pickdowns displayed on the trajectories;
Fig. 7 shows example of a grid of sensors to strengthen a signal of absdiff, wherein left part of the figure shows a state prior to the change, right part of the figure shows a state after the change and the central part represents direct difference of before and after states, which is expressed by the "absdiff" function, with changes in brightness highlighting the value of the neural network on the grid. The lines represent the typical positions of each pyramid, with the store divided into pyramids or "lines".

### DETAILED DESCRIPTION OF THE INVENTION

The method according to this invention has been implemented in the following real world scenario. A hot rolled steel coil warehouse stores steel pieces of weight ranging between 5 to 20 tons in warehouse storage sized 400 x 30 m, forming part of a 600 m long hall. The warehouse stores up to 50 thousand tons of steel and is serviced by 6 bridge cranes 12 m above the ground. The coils are entering through a conveyor with a robot marking them. There are additional minor backflows and side inflows of material from other halls. The method employs use of 100 edge devices, each provided with 2 to 3 cameras, placed in the ceiling 18 m above the floor. Further 20 of those devices are placed on the cranes, each with 1 to 2 cameras. All stationary devices are connected through ethernet and devices on cranes through WiFi.

Process of installation and system setup involves positioning of cameras of the edge devices so that the camera has at least 50 % overlap and every position on the ground is being observed by at least 4 cameras at the same time. A 3D model is photogrammetrically created from a drone footage or a high-quality camera image sampling along the warehouse. Calibration of the camera (intrinsic - lens parameters, field of view, focal length, etc. and extrinsic - exact location and orientation) parameters are determined through optimization to best reproduce the camera view in a 3D model. Through camera calibration, every pixel of a camera is mapped to a line in 3D space.

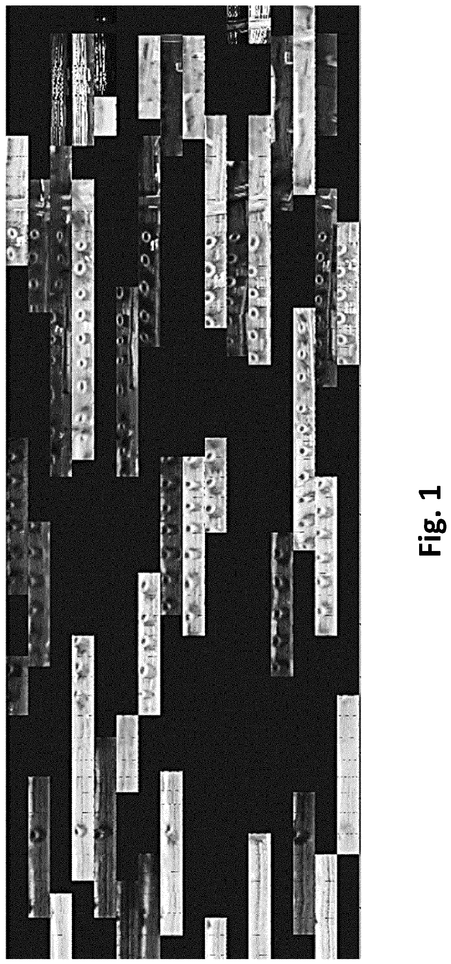

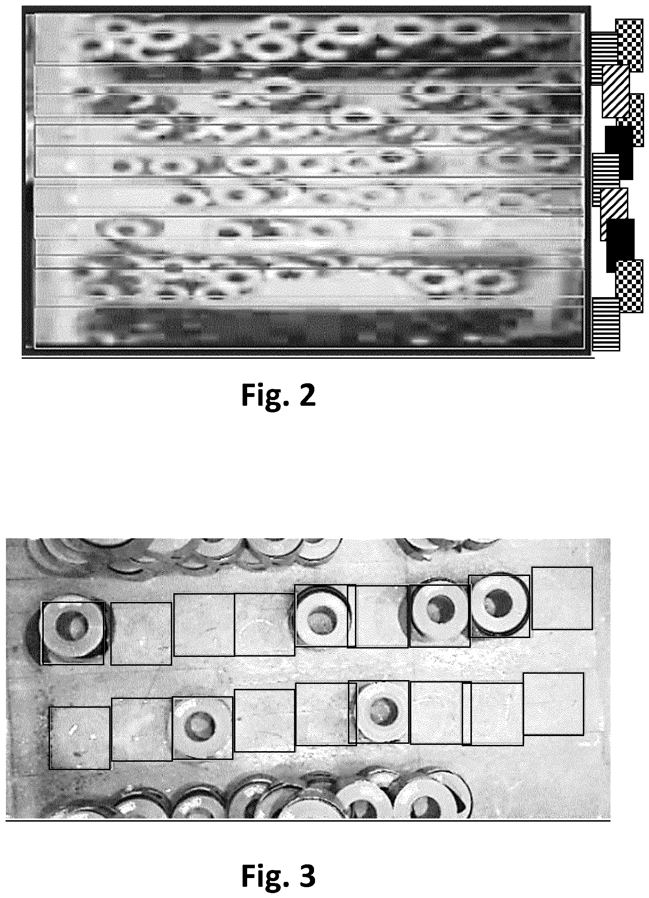

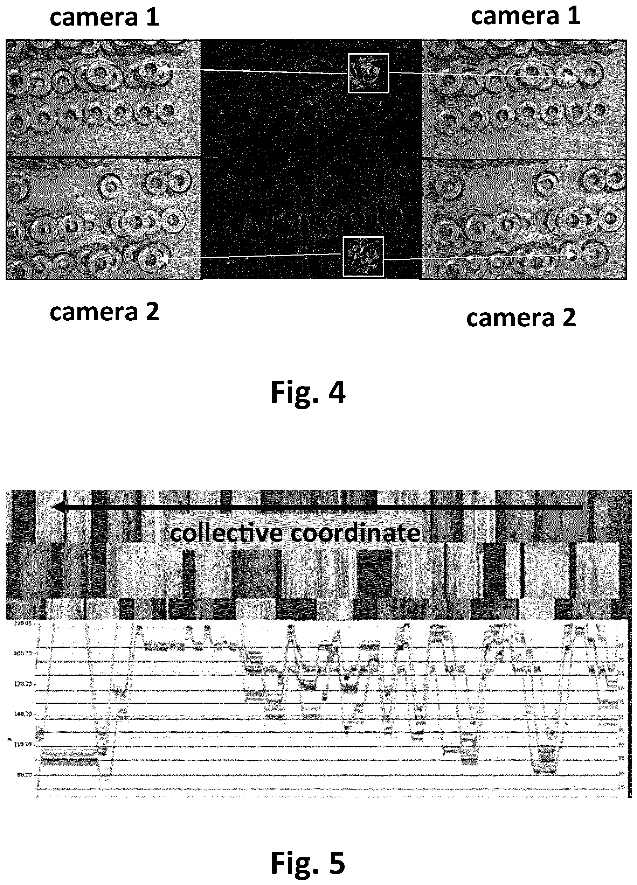

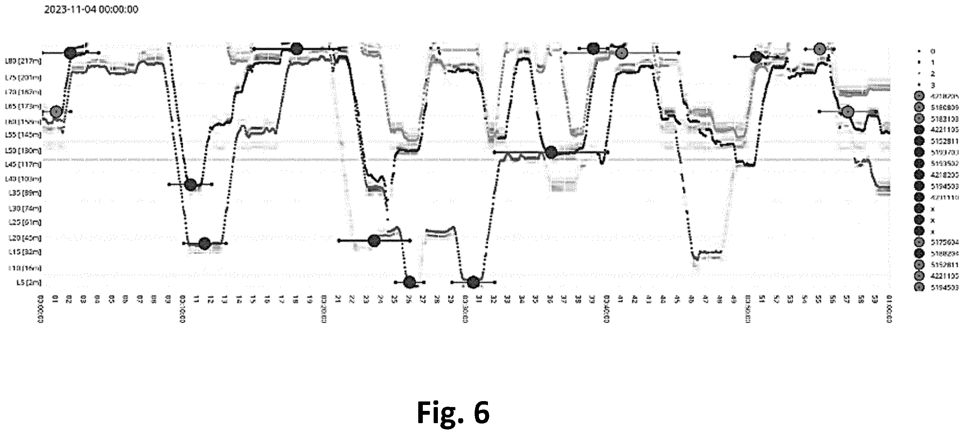

Further, the illustration of the data processing pipeline is provided below:
a. Each camera image has a high-resolution view of a portion of the warehouse, but no camera sees the entire warehouse. Multi-camera view is obtained by arranging images into a composite image of an entire observed plane, e.g. the entire ground of the warehouse, or the plane of the cranes. The example of the multi-camera view is shown on Fig. 1. An overlap of the cameras for the same row where the object is placed is shown on Fig. 2.
b. On each camera, for each region of interest expected position of material, a CNN detector is placed to detect any pick-ups and pick-downs of material. In the plane of vehicles that may be different, CNN detectors are placed in overlapping positions to fill the plane. The score of the CNN has a real world interpretation of likelihood of material position, pickup, pickdown, material position. The placement of the CNN detectors is shown of Fig. 3.
c. CNN on part of image defined as region of interest showing the objects from two or more cameras have the same physical interpretation (pickup of a coil, presence of a crane in a specific position), therefore, corresponding signal from several cameras is used compared to flag any inconsistencies. If the signal is consistent across cameras, the signal is considered reliable, if there is an inconsistency, it is escalated to human annotators. The images from two different cameras with the change in object placement identified by CNN detector is shown on Fig. 4. The left part of the figure shows state of first and second camera before the object has changed position and on the right part shows state of the first and second camera after the object has changed position, meanwhile the middle portion shows the detection using CNN detector;
d. Motion can be better presented to annotators by defining a collective coordinate, along which we plot their position in time. Automatic trackers are applied to track full trajectories of vehicles, and the trajectories can be checked by the annotators efficiently in a single image, as shown on Fig. 5.
e. Association of tracked objects with transportation means is done by location and timing. If a vehicle stopped in the same position where a pickup was detected, we assume the vehicle is carrying the object henceforth until the next pickdown detected. This motion and events are represented using the same method as in the previous case, hereby shown on Fig. 6.
f. Connecting pickups and pickdowns: for each vehicle, a sequence of pickdown and immediate next pickup form a trajectory of a specific object. The objects are assumed stationary unless a transport is detected through such trajectories.
g. Updating a database of object positions: a list of trajectories is propagated on a database of objects.

### Spatial 2D grid

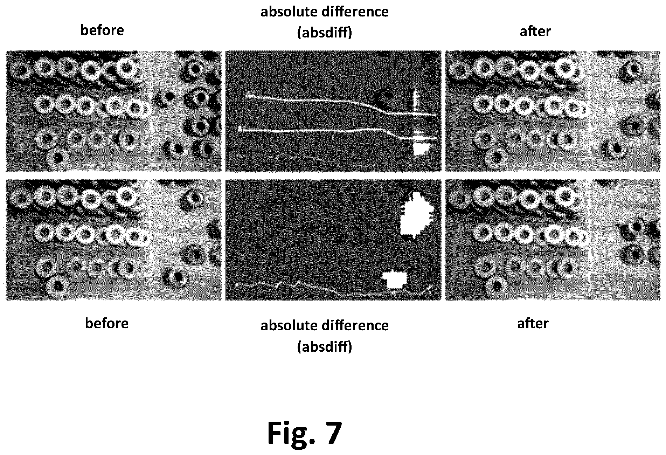

Updating the positions of stock keeping units requires detection and identification of events. A stationary view of a shop floor is assigned a 2D grid with the help of a certain number of world-pixel correspondences. Large obstructions are filtered using virtual sensors from the same or adjacent cameras. Obstructed views are filtered and flag the state of the stationary view before and after as an input for comparison. Discretized regions of interest are thresholded based on the pixel difference and two images are stacked to produce a multidimensional array. The array is classified using a CNN classifying an event candidate. Region of interest is projected onto a predefined stock keeping area and an estimator dependent on the history of event classification is used to predict the remaining spatial dimension. The example is shown on Fig. 7.

Alternatively, the use of a laser odometer to measure position of crane winch may be used instead of detection using a grid of virtual sensors.

### INDUSTRIAL UTILIZATION

The disclosed solution has good industrial applicability especially for tracking larger objects of known shape or appearance, for example, in large industrial halls, warehouses without fixed shelf systems, container docks, train docks, car parks etc. It is particularly suitable for tracking coils, metal pieces and larger construction elements. The method provides reliable data source for obtaining digital twin of objects to be tracked, representing real-time information on each stock keeping unit (SKU) in a warehouse (WH), which brings significant benefits to WH managers and thus saving human labor spent on looking for material, improving management flow, reducing the overall equipment effectiveness (OEE) of vehicles, improving throughput, quality etc.

## Claims

1. A method of tracking objects using computer vision with reduced computational workload, **characterized in that** it comprises use of a computer tracking system for controlling the data on tracked objects, further it comprises use of several cameras which are deployed in the area where the objects shall be tracked, wherein each camera is connected to at least one computer processor, the processor being preferably located in the proximity of camera not extending 1 km of distance so that both the camera and the processor form part of a cloud-edge hybrid device,
wherein the cameras are adapted to cover all positions of the tracked objects so that the object is visible during its movement by at least one camera to ensure conserving its identification data in the tracking system,
wherein the camera resolution and frame rate allow for human recognition and identification of objects and transportation means used for physical interaction with the tracked object including its movement within the observed area, pickup and pickdown of the tracked object,
wherein the method further employs use of virtual sensors, wherein each virtual sensor comprise computer program instructions adapted to provide simplified representation of 3D space on input and return the occurrence probability of a specific object in a certain position and certain time on the output,
wherein virtual sensor is repeatedly applied to processed images obtained from camera, and provides a time series of probabilities of a presence or motion of an object at a specific position, which are used for consolidation i.e. strengthening signal across several virtual sensors and detecting the presence or motion at high accuracy,
and the virtual sensor is adapted to measure probability and detect object appearance and disappearance by comparing images of the same part of the observed area,
and wherein the method involves following steps:
• A: applying convolutional neural network (CNN) in order to turn parts of the individual image into scores representing likelihood of occurrence of an object in a corresponding 3D area, thus processing the video footage into a time series data using CNN or other feature assessment techniques, wherein the object of interest may also include material, material changes, and vehicles;
• B: tracking of vehicles, wherein, for any detected object, its position in time t+dt is updated from its position in time t assuming a certain maximum displacement for items associated with vehicles and no motion for items not associated with vehicles;
• C: association of tracked object and transportation means;
• D: connecting of pick-ups and pick-downs executed by transportation means and association of object and transportation mean into full transport trajectories;
• E: updating of the database of instantaneous objects and transportation means positions by simulating the transport trajectories.

2. The method according to claim 1, wherein prior to step A, arrangement of images using 3D knowledge of the area to obtain video footage is performed.

3. The method according to claim 1 or 2, wherein the data from cameras are processed at the local processor within the cloud-edge hybrid device,

4. The method according to any of claims 1 to 3, wherein prior to step B, combining time series data from multiple sources to achieve consensus or escalate the error for human correction is performed.

5. The method according to any of claims 1 to 4, wherein the virtual sensors are set-up using a pre-trained convolutional neural network (CNN), which is set on a specific position in the simplified 3D model and the pre-training process involves training a CNN on a large dataset for a related task before fine-tuning it on the specific task of interest.

6. The method according to any of claims 1 to 5, wherein upon detection of disagreement between values obtained from various virtual sensors, the data on tracked object are manually corrected by human operator.

7. The method according to any of claims 1 to 6, wherein the manual correction of the data is used for re-training of the CNN to increase the accuracy of the virtual sensor.

8. The method according to any of claims 1 to 7, wherein the tracked object includes transportation means such as cranes, forklift and/or trucks.

9. The method according to any of claims 1 to 8, wherein all cameras are stationary.

10. The method according to any of claims 1 to 9, wherein it employs of tracking algorithms for improved automatic accuracy selected from expectation-maximization (EM) algorithm and/or Gaussian curve fitting and/or NEB (Nudged Elastic Band) technique.

11. Use of the method according to any of claims 1 to 10 for tracking objects in industrial halls, warehouses without fixed shelf systems, container docks, train docks and car parks.

12. Use of the method according to any of claims 1 to 11 for tracking coils, metal pieces and construction elements.
